# EUROPEAN PATENT SPECIFICATION

(11) **EP 1 263 654 B1**
(45) Date of publication and mention of the grant of the patent: **02.04.2008**
(21) Application number: 00941117.4
(22) Date of filing: 07.06.2000
(51) Int. Cl.: B65D 5/40, B32B 5/16, B32B 23/08

(54) **MULTI-LAYER RESIN/PAPER LAMINATE STRUCTURE CONTAINING AT LEAST A POLYMER/NANOCLAY COMPOSITE LAYER AND PACKAGING MATERIALS MADE THEREOF**
MEHRSCHICHTIGE LAMINATENSTRUKTUR AUS HARZ UND PAPIER, ENTHALTEND MINDESTENS EINE SCHINCHT AUS POLYMER/TON-NANOVERBUNDSTOFF UND DAMIT HERGESTELLTE VERPACKUNGSMATERIALIEN
STRUCTURE STRATIFIEE MULTICOUCHE DE RESINE/PAPIER CONTENANT AU MOINS UNE COUCHE COMPOSITE DE POLYMERE/ARGILE NANOPARTICULAIRE ET MATERIAUX D'EMBALLAGE FABRIQUES

(30) Priority: 14.06.1999 US 330998
(43) Date of publication of application: 11.12.2002
(73) Proprietor: Evergreen Packaging International B.V., 1043 EJ Amsterdam (NL)
(72) Inventor: SHIH, Keith, S., Harriman, NY 10926 (US); ADUR, Ashok, M., Ramsey, NJ 07446 (US); FRANK, Benjamin, Monsey, NY 10952 (US); SOLIMENO, Robert, D., Florida, NY 10921 (US)
(74) Representative: Wasmeier, Alfons
(86) International application number: PCT/US2000/011875
(87) International publication number: WO 2000/076862

(56) References cited:
- EP-A- 0 550 039
- WO-A-03/051994
- WO-A-20/05012430
- US-A- 4 952 628
- US-A- 4 977 004
- US-A- 5 102 948
- US-A- 5 700 560
- DATABASE WPI Section Ch, Week 200512 Derwent Publications Ltd., London, GB; Class A14, AN 1995-269348 XP002340335 & CN 1 076 662 C (SUMITOMO CHEM CO LTD) 26 December 2001 (2001-12-26) & EP 0 691 202 A (SUMITOMO CHEMICAL COMPANY LIMITED) 10 January 1996 (1996-01-10)
- DATABASE WPI Section Ch, Week 200544 Derwent Publications Ltd., London, GB; Class A14, AN 1997-156960 XP002340336 & JP 03 666133 B2 (SUMITOMO CHEM CO LTD) 29 June 2005 (2005-06-29) & EP 0 761 739 A (SUMITOMO CHEMICAL COMPANY, LIMITED) 12 March 1997 (1997-03-12)

## Description

### BACKGROUND OF THE INVENTION

The invention relates to laminate structures for packaging and non-packaging applications. This laminated structure can be used for both food and non-food packaging applications. More particularly, there is provided a laminate structure including a paper or paperboard substrate having at least one layer of a polymer/nanoclay composite (or polymer/nanosilicate composite) comprising a nanoclay (or nanosilicate) and a polymer resin. This polymer/nanoclay composite layer can be directly attached to or coated on the paper or paperboard without the need for a tie layer. When the polymer/nanoclay composite layer is placed adjacent to a chemically different polymer layer, a tie layer may be necessary at the junction to bond them together so that the laminate structure can remain glued together.

The phrase "polymer/nanoclay composite" refers to the degree of dispersion of the clay or the silicate layers into the polymer resin being on the nanometer scale or on a molecular level. The individual layer thickness of the clay particles in a fully dispersed or exfoliated polymer/nanoclay composite system is about 0.7 to 1.2 nanometers. From a more practical point of view, however, one can define a polymer/nanoclay composite as one system in which the average thickness of the clay particles is between 0.7 and 9 nanometers. This is normally achieved by:
1) chemically treating the swellable clay such as smectite with a chemical agent to convert the clay from being "hydrophyllic" to being "organophyllic",
2) letting the organic phase monomer swell into the gallery between the "organophyllic" silicate layers, and
3) polymerize the monomer in-situ.

Since the silicate layers are well dispersed into the polymer matrix, the aspect ratio of the clay particles can reach 1,000 or higher and thus provides tremendous improvement in barrier and mechanical properties to the polymer matrix. The preparation of such a polymer/nanoclay composite, also called a nanocomposite containing clay, has been disclosed in a patent by A. Okada et al (U.S. 4,739,007). Another method to make such a nylon/nanoclay composite by "melt blending" or compounding the clay into the polymer resin is disclosed in U.S. Patent 5, 385, 776.

Other examples of polymer/nanoclay composites in the literature can be found in U.S. Patent 4,889,885, with a focus on polymer/nanoclay composite manufacturing technique. The polymers include vinyl polymers such as polystyrene, thermoset resins such as epoxy, and rubbers; in U.S. Patent 5,091,462 on polypropylene based nanoclay composite by "blending" nylon 6/nanoclay composite with polypropylene; in U.S. Patent 5, 102, 948 on nylon/nanoclay composite manufacturing method (a follow-up to US 4,739,007 cited previously); and in U.S. Patent 5, 552, 469 with claims on polymer/nanoclay composite manufacturing methods but focused on water soluble polymers.

PCT publication No. WO 99/01504 relates to a laminated structure containing at least one layer of polyolefin integrated with clay particles having a thickness of from 0.9 to 100 nanometers. This material is not considered a nanoclay composite because the thickness of the clay particles is over the range of 0.7 to 9 nanometers, as previously defined. Also emphasized is the clarity, non-opaque nature of the laminate. This is contrary to the opaque paper/paperboard structure of the present invention. The paper/paperboard substrate of the present invention blocks sunlight and harmful UV light that can cause degradation of the product contents.

Nanocomposites containing clay are becoming prevalent in the literature as can be seen from the following references: "Relaxations of Confined Chains in Polymer Nanocomposites: Glass Transition Properties of Poly(ethylene oxide) Intercalated in Montmorillonite", R.A. Vaia et al., J. Poly. Sci. B: Poly. Phys, , 35, 59 (1997); "Polymer Layered Silicate Nanocomposites", E.P. Giannelis, Adv. Mater.,8, 29 (1996); and "Clay-Filled Nanocomposites Offer Extraordinary Properties", Plastics Technology, 1, 21 (1998).

Whether a polymer/nanoclay composite is prepared by the intercalation of the clay with the monomer followed by polymerization, or by the direct compounding method, such a polymer/nanoclay composite provides a great amount of tortuous path and results in tremendous improvement in gas or moisture barrier properties. The polymer/nanoclay composite also results in excellent improvement in stiffness and heat resistance of the resin. Therefore, the polymer/nanoclay composite layer provides improved gas barrier properties to the package, improved moisture barrier to the package, and added rigidity to the structure. However none of the references cited above cover the use of paper or paperboard in their laminated structure or provides the specific combination of performance properties, as envisioned in our invention: opacity, high stiffness per unit cost, printability, bulge resistance, superior barrier to oxygen, moisture, carbon dioxide and flavor, and other properties known to be desirable to one skilled in the art.

Many foods, especially liquids, are susceptible to oxygen or other gases that cause them to spoil, degrade, or change flavor. Therefore, the package or container that is used to store the food should have very good oxygen barrier properties to protect its contents. U.S. Patent 5,725,918 deals with packaging structure with claims including structures such as LDPE/paper/nylon/tie/HDPE/LDPE/HDPE. It does not cover our invention. However, it does include nylon in the laminated structure as the oxygen barrier layer.

US Patent 5,700,560 discloses a layer comprising a paper layer and a plastic film made of polyvinyl alcohol. The percent by volume range of the inorganic material in the inorganic filler/high hydrogen bonding resin composite of this disclosure is between 5% by volume and 9,0% by volume (according to column 8, lines 8-12), and this range does not disclose, but teaches away from the claimed range of the subject invention.

It is also very important that the package have very good moisture barrier, so that moisture does not penetrate if dry food is stored inside. In the case for liquid (or water-containing) storage, the excellent moisture barrier properties of the package will minimize the moisture transport out of the package, as well. This can be enhanced by applying polyolefin layers to the laminate structure.

The cellulosic materials in the cartons themselves are susceptible to moisture which weakens their internal bonds and leads to bulging of the carton and a perception of a spoiled and obsolete product on the shelf. The weakening of the internal fibrous structure inside a paperboard can happen through any one or any combination of the following three mechanisms: 1) diffusion of moisture through the polymer resin coating on the cartons into the paper, 2) moisture wicking through pinholes or defects generated by coating and the subsequent converting processes, and 3) moisture wicking through unprotected raw edge at the side seam or at the bottom seam. If the resin layer can impart sufficient stiffness to the whole carton structure, it is possible to maintain the carton integrity even though the internal fibrous structure inside the paperboard is weakened.

In the second mechanism, the defects are often caused by blister or bubble formation on the layer immediately adjacent to the paperboard at the inside of the carton. This happens during heat sealing when intensive heat is applied to the inside of the carton. Since paperboard usually contains some amount of moisture, in equilibrium with the outside environment, this intensive heat can vaporize the moisture inside the paperboard. The outside carton surface is usually coated with a layer of a moisture barrier such as polyethylene. The temperature at the outside surface is not very high. Hence this outside moisture barrier layer remains rather rigid. Therefore, the vapor cannot escape through the outside barrier layer. Since the inside surface temperature is very high, the polymer layer immediately adjacent to the paperboard may be "softened" enough so that blister formation becomes inevitable. Therefore, a polymer with good heat resistance adjacent to the paperboard is important to prevent this blister formation from happening.

Polyolefins such as polyethylene or polypropylene have been used to provide the moisture barrier properties needed. Generally speaking, a resin exhibiting excellent moisture barrier does not have good oxygen barrier and vice versa. As a result, multi-layer structures containing both oxygen barrier layers and moisture barrier layers are produced to address these concerns.

Ethylene vinyl alcohol copolymer (EVOH) has excellent oxygen barrier properties and has been used in packaging applications, such as orange juice packaging. However, the oxygen barrier of EVOH is known to be sensitive to moisture content in the environment and relative humidity (RH). At high relative humidity, EVOH tends to lose its oxygen barrier properties. This is not desirable. The processing of EVOH is known to be sensitive to processing temperatures, moisture level inside the resin, and equipment design. If these concerns are not addressed, gel formation tends to occur in the EVOH extrusion coating process, adversely impacting long term production.

Typically, nylons or polyamides do not possess the low oxygen transmission rates necessary for producing packaging containers economically. Hence the package requires a very thick nylon layer if nylon alone is to be used for such applications. It is not economically feasible to make such a thick layer of nylon in a laminated structure. However if one could significantly reduce the oxygen transmission rates of nylon such as by using nylon 6/nanoclay composites, the laminate structures containing paper or paperboard and such nylon 6/nanoclay composite layer with reduced thickness could be used for the packaging applications listed above.

Further, the oxygen barrier of nylon 6/nanoclay composite is not as sensitive to moisture as in the case of EVOH. Nylon 6/nanoclay composite is also relatively easier to process and does not cause gel formation. Therefore, the use of nylon 6/nanoclay composite in laminated structures and in packaging applications as an oxygen barrier material is very desirable. This invention covers the use of such polymer/nanoclay composites containing nylon in such multi-layer resin/paper laminate structures.

The conventional method of making a paper/multilayer polymer laminate structure containing a least a layer of polymer/nanoclay composite is to use the extrusion coating process in which a moving paper web is coated with single or multi-layer polymer melt through the extrusion coating die. The paper/polymer melt laminate is then subsequently passed through a nip roll/chill roll in order for it to cool down before it is wound up in the winding station. Sometimes one has to apply treatment on the paper surface in order for it to stick to the hot polymer melt. The usual treatment is flame treatment so that polar species are induced on the paper surface. The flame treatment is usually done on-line. Other suitable surface treatments include corona discharge, ozone treatment, etc. These treatments can be done on-line or off-line. In the case of multi-layer co-extrusion coating, various polymer melts from different extruders flow through the heated pipes to a feed block. Each polymer melt is converted into a layered form inside the feed block. Various molten polymer layers are then combined at the exit of the feed block before it enters into the extrusion coating die. An alternative method is to use the multiple manifold die and let the layers combine inside the die. The layers are combined at or close to the final land of the die, and they exit as one integral layer. A third approach combines both the feed block and multiple manifolds to provide even better processing control.

Another method of making a paper/multilayer polymer laminate structure containing a least a layer of polymer/nanoclay composite is to use the extrusion lamination process. In this process, a solid polymer laminate that has been pre-formed elsewhere is fed along with the moving paper web through an extrusion die. A polymer hot melt layer (as an adhesive layer) is directed through the extrusion die and deposited between the paper web and the laminate. The paper/adhesive/laminate is then passed through the nip roll and the chill roll to cool down before it is wound on the roll at the winding station. Sometimes it is necessary to apply a surface treatment on the laminate film surface in order for it to stick to the adhesive layer. It is also necessary to apply a surface treatment on the paper for the same reason. The surface treatment for the laminate film can be corona discharge or ozone treatment and can be done either on-line or off-line. As for the surface treatment for paper, it can be flame, corona discharge, or ozone. An alternative method is to use adhesive lamination, where an adhesive, a primer or a glue is applied between two adjacent layers or substrates during the lamination process.

With the above methods and alternative ones that are known to one skilled in the art, one can prepare the laminated structures of this invention. The polymer/nanoclay composite is applied to the surface of the paper or paperboard substrate in a relatively thin, continuous layer, preferably without any pinholes. The polymer/nanoclay composite layer is preferably applied to provide a coating weight of from about 0.5 to about 25 pounds per 3000 square feet of paperboard, preferably from about 1 to about 10 pounds per 3000 square feet, and most preferably from about 1.5 to about 6 pounds per 3000 square feet. Accordingly, the layer may have a thickness ranging from about 1 to about 30 microns, preferably about 3 to 9 microns. The clay particles may have a thickness ranging from 0.7 to 9 nanometers.

Examples of such a paperboard would include but are not restricted to bleached paperboard, unbleached paperboard, kraft, sulfide, multi-ply, etc. The weight of the paper or paperboard could vary from 3 lb./3 MSF to 500 lb./3 MSF. A particularly preferred substrate is a bleached paperboard made by International Paper Company with weights in the range of 150 lb. to 300 lb./3 MSF and more preferably in the range of 180 to 290 lb./3 MSF.

Various coatings or treatments may be applied to the paperboard before or after co-extrusion coating process. These coatings could include sizing agents, primers and other wet-end and off-line additives.

It is an object of this invention to produce a package or container that has improved physical barrier properties in its laminate structure using the laminate structure of the invention. Other methods known to those of ordinary skill may also be used to obtain a container such as single or multi-layer polymer structure container containing the laminated structure of this invention. Examples of such a rigid or flexible container prepared by the above methods include packages and other articles such as cartons, bottles, jars, pouches, bags, trays, plates, cups, etc.

It is a further object of this invention to use the laminate structure of the invention to produce food carriers which have improved stiffness and reduced tendency to warp in ovenable applications.

It is still a further object of this invention to produce laminated structures used as food carriers, such as paper plates, trays, and cups which have improved stiffness.

Additionally, it is an object of the present invention to produce a carton having increased stiffness and reduced bulge.

Additionally, it is an objective of the present invention to produce a food package that has the ability to contain reduced thickness of the barrier layers in the laminate structure, thereby reducing the overall cost of the structure.

It is a further object of the invention to produce laminated structures for various applications including for conversion to a package for food and non-food applications that provides improved flavor retention, oxygen and moisture barrier properties and heat resistance.

### SUMMARY OF THE INVENTION

According to the present invention, there is disclosed a multi-layer structure containing at least one polymer/nanoclay composite layer formed from a blend of a nanoclay and a polymer resin that serves as a barrier layer when either 1) coated directly onto a paper or paperboard substrate, or 2) coated onto other resin layers, that have been attached to the paper or paperboard, to form a laminate structure for packaging applications. The package is suitable for the containment of liquids such as milk, juice, liquid detergent, or liquid fabric softener and for storage of dry food such as cocoa powders. The package is especially suitable for packaging oxygen-sensitive foods, especially liquids such as citrus juices or blends thereof.

A preferred polymer/nanoclay composite combines a polyamide such as nylon 6 and a nanoclay or a nanosilicate, as the barrier layer which is directly attached or coated onto the substrate without the need for a tie layer. When the polyamide/nanoclay composite layer is placed adjacent to one or between two chemically different polymer layers, a tie layer may be necessary to bond the disparate materials together so that the laminate structure can remain glued together.

A detailed description of a nylon 6/nanoclay composite can be found in the teachings of a patent by A. Okada et al. (U.S. 4,739,007). Since the nanoclay particles are very well dispersed into the nylon 6 polymer matrix on a molecular level, the barrier properties, stiffness, and heat resistance of the nylon 6 polymer are greatly improved. For instance, at a loading of only 2 wt% nanoclay, the tensile modulus of nylon 6/nanoclay composite is increased by 55% over that of the neat nylon 6 resin. The oxygen transmission rate (OTR) is reduced by 50%, the water vapor transmission rate (WVTR) is reduced by 43%, and the heat distortion temperature (HDT) is increased from 70°C to 130°C at 2 wt% loading.

A design of a laminate structure that incorporates a polyamide such as nylon 6/nanoclay composite as the oxygen barrier and polyolefins such as polyethylene as the moisture barrier to effectively block or slow down the moisture and oxygen transport, can be used to hold food or non-food, either in liquid or solid form. Physical properties such as stiffness, strength, and heat resistance are also substantially improved due to the polyamide/nanoclay composite used in the laminate.

In certain types of food packaging applications, a retort process is used to sterilize the food content while it is in the container or package. The retort conditions are rather severe and require the use of super heated steam for at least 30 minutes. EVOH resin is known to undergo the so called "retort shock". It loses part of its oxygen barrier properties after the retort process and does not completely recover its barrier properties. Therefore, it would be desirable to use the laminated structure of this invention in packaging and non-packaging applications that need to be retorted, autoclaved or processed at high temperatures and/or high relative humidity. Since polyamide/nanoclay composites are not known to exhibit this retort shock, it is an ideal candidate for paperboard based retort packaging systems.

Alternate polymer/nanoclay composites combine nanoclays with other barrier polymers, including but not limited to ethylene vinyl alcohol copolymer, polyethylene polymers (low density polyethylene, high density polyethylene, copolymers of ethylene and unsaturated esters such as vinyl acetate and methyl acrylate, linear low density polyethylene, ethylene-based ionomers, etc.), polyethylene terephthalate, polyamides such as nylon 6, nylon 66, nylon 10, nylon 6-10, nylon 12, amorphous nylons, and MXD6 nylon, polyethylene naphthalate, liquid crystalline polymers, polypropylene, and blends thereof.

### BRIEF DESCRIPTION OF THE DRAWINGS

The invention is further described and depicted in reference to the following drawings wherein:
**FIGURE 1** is a side cross sectional view of a laminate depicting one of the embodiment of the present invention;
**FIGURE 2** is a side cross sectional view of a laminate depicting another embodiment of the present invention;
**FIGURE 3** is a side cross sectional view of a laminate depicting another embodiment of the present-invention;
**FIGURE 4** is a side cross sectional view of a laminate depicting another embodiment of the present invention;
**FIGURE 5** is a side cross sectional view of a laminate depicting another embodiment of the present invention;
**FIGURE 6** is a side cross sectional view of a laminate depicting another embodiment of the present invention; and
**FIGURE 7** is a side cross sectional view of a laminate depicting another embodiment of the present invention.

### DETAILED DESCRIPTION OF THE INVENTION

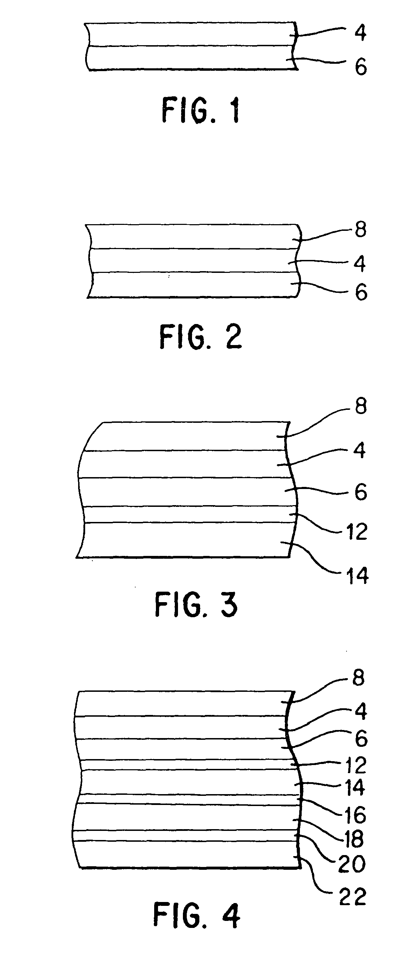

Figure 1 depicts the first embodiment of the invention that is a package for food or non-food products made from a laminate having a paper or paperboard substrate **4,** and a polymer/nanoclay composite barrier layer **6** attached, coated or extruded directly onto the substrate **4,** without the need of a tie layer or adhesive. The substrate **4,** such as paper or paperboard, being opaque, can block harmful sunlight or UV radiation which can be detrimental to the contents inside a package.

For various packaging applications, such as liquid packaging, it is sometimes desirable to coat the other side of the substrate **4,** with a polyolefin layer **8,** such as a layer of polyethylene (see Figure 2).

The polymer/nanoclay composite layer **6** can be coextruded onto the paper substrate along with other polymer resin layers.

Another embodiment of a packaging structure includes the paper substrate **4,** the exterior layer of a polyolefin polymer **8,** the polymer/nanoclay composite layer **6,** a tie layer **12** and a second layer of polyolefin **14,** that comes into contact with the contained food material (see Figure 3). The polyolefin layers **14** and **8** serve as the heat sealing layers. Layer **14** also enables us to skive the side panel in order to protect the paper raw edge in the side seam.

Another alternative embodiment, see Figure 4, adds a combination of a tie layer 16/a flavor retention layer **18**/a tie layer **20,** and another layer of a polyolefin **22** on the polyolefin layer **14.** The polyolefin layers **8** and **22** serve as the heat sealing layers. Layer **22** also enables us to skive the side panel in order to protect the paper raw edge in the side seam. This structure also contains a flavor retention layer **18**, to block the migration of aroma or flavor oils from the storage content such as orange juice. The preferred flavor retention layer material is ethylene vinyl alcohol copolymer. Alternatively, one can use barrier polymers such as polymer/nanoclay composite, polyamides, or polyesters as flavor retention layer **18.** The preferred polymer/nanoclay composite material as flavor retention layer **18** is nylon-6/nanoclay composite. However, other polymer/nanoclay composite can also be used as flavor retention layer **18.** They include ethylene vinyl alcohol copolymer/nanoclay composite, polyethylene terephthalate/nanoclay composite, polyethylene naphthalate/nanoclay composite, and liquid crystalline polyester/nanoclay composite. The preferred polyamide as a flavor retention layer **18** is nylon 6. However, other polyamides such as nylon 66, nylon 10, nylon 6-10, nylon **12**, amorphous nylons and MXD6 nylon can also be used. The preferred polyester as a flavor retention layer **18** is polyethylene terephthalate. However, other polyesters such as polyethylene naphthalate and amorphous polyesters can also be used. The placement of such a flavor retention layer **18** immediately next to the polyolefin heat sealing layer **22** is to minimize the flavor scalping activities of the polyolefin heat sealing layer **22.**

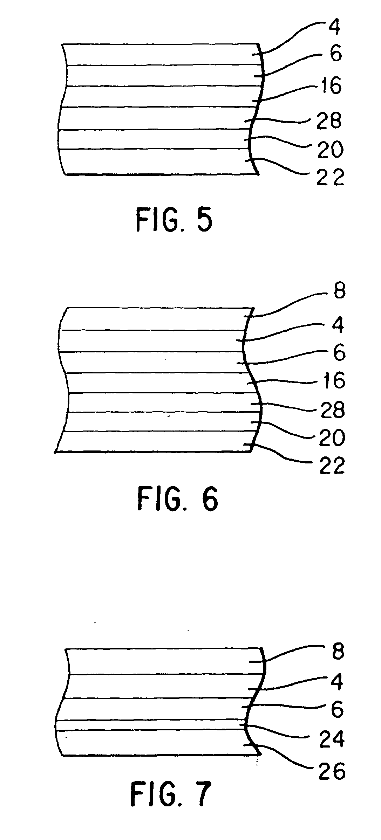

Another alternative embodiment of a packaging structure is made from a laminate structure having a paper substrate **4,** a polymer/nanoclay composite barrier layer **6,** with an addition of a combination of a tie layer 16/ethylene vinyl alcohol copolymer (EVOH) **28**/a tie layer **20** and another layer of a polyolefin **22** on the polymer/nanoclay composite layer **6** (see Figure 5). This structure contains a layer of EVOH as an additional oxygen barrier layer.

Another alternate embodiment of a packaging structure is made from a laminate structure having a paper substrate **4,** an outside polyolefin layer **8,** a polymer/nanoclay composite barrier layer **6,** with an addition of a combination of a tie layer **16**/ethylene vinyl alcohol copolymer (EVOH) **28**/a tie layer **20** and another layer of a polyolefin **22** on the polymer/nanoclay composite layer **6** (see Figure 6). This structure also contains a layer of EVOH as an additional oxygen barrier layer.

For retort packaging applications, an alternative embodiment is provided wherein a paper substrate **4,** is coated directly with the polymer/nanoclay composite layer **6.** On the uncoated side of the paper substrate **4,** there is provided a polyolefin layer **8,** such as a polyethylene or preferably a polypropylene polymer. Coated onto the polymer/nanoclay composite layer **6** is a tie layer **24** and a layer of polypropylene **26** (see Figure 7).

A preferred polymer/nanoclay composite is a blend of nylon 6 and a nanoclay, or nanosilicate, called a polyamide/nanoclay composite. The nanosilicate is preferably present in a loading level of from 0.1 to 40 weight percentage of the composite, and most preferably from 0.5 to 7 weight percentage.

Other barrier polymer resins such as ethylene vinyl alcohol copolymer (EVOH), polyethylene (PE), polyethylene terephthalate (PET), polyethylene naphthalate (PEN), liquid crystalline polyesters (LCP), polypropylene (PP) and polyamides such as nylon 66, nylon 10, nylon 6-10, nylon 12, amorphous nylons, and MXD6 nylon can be used as a part of the nanoclay composite blend in alternate embodiments. In most cases, the placement of the polymer/ nanoclay composite layer will be at layer **6** of Figures 1 through 7. Additionally, as in the case of polyethylene/nanoclay composite and polypropylene/nanoclay composite, the placement can be at layer **8** in Figure 2, at layer **8** and/or layer **14** in Figure 3, at layer **8** and/or layer **14** and/or layer **22** in Figure 4, at layer **22** in Figure 5, at layer **8** and/or layer **22** in Figure 6, at layer **8** and/or layer **26** in Figure 7.

Suitable nanoclays for the invention include smectites such as montmorillonite, hectorite, saponite, and beidellite clays. Loading levels of the clays in the composite are preferably from 0.1 to 40 wt% and most preferably from 0.5 to 7 wt%.

Polyolefin layers suitable include but are not limited to polyethylene polymers including low density polyethylene, linear low density polyethylene, polypropylene, high density polyethylene and combinations thereof.

The tie layers used in this invention primarily consist of modified polyethylene or modified polypropylene. The modifications are usually chemical grafting or copolymerization with acidic polar function groups such as maleic anhydride, acrylic acid, and methacrylic acid or ester functional groups such as ethyl acrylate and butyl acrylate, etc. Since the amount of polar groups incorporated is usually small, these modified polyolefins maintain their moisture barrier properties. Therefore, one can consider these tie layers as moisture barrier layers as well. For practical purposes, one can replace the polyolefin layer with a tie layer and use the tie layer as a moisture barrier layer. Therefore, the tie layer **12** and polyolefin layer **14** as depicted in Figure 3 can be combined as one tie layer. The tie layer **20** and polyoelfin layer **22** as depicted in Figures 4, 5, and 6 can be combined as one tie layer. The tie layer **24** and polyolefin layer **26** as depicted in Figure 7 can be combined as one tie layer. Alternately, the tie layer **12**/polyolefin layer **14**/tie layer **16** as depicted in Figure 4 can be combined as one tie layer.

The polymer/nanoclay composite and paper laminate structures provide good gas barrier properties and increase stiffness of the composite barrier layer helping a carton produced therefrom remain rigid.

The use of nylon 6 as the preferred polymer as the nanoclay composites matrix has the following benefits:
1) No tie layer is needed between the nylon 6/nanoclay composite and the paper or paperboard substrate when coated directly on such substrate.
2) In all such cases nylon 6/nanoclay composite gives a pin-hole free coating without the heat induced blisters unlike most polyolefins.
3) By eliminating the need for EVOH (ethylene vinyl alcohol copolymer) as the oxygen barrier layer in the structure, it can simplify the manufacturing process for some applications.

### EXAMPLES

### EXAMPLE I

Nylon 6/nanoclay composite is commercially available in the pellet form from the Ube Industries, Limited in Japan. A grade of such composite containing 3 wt% of clay (Ube nylon 1022C2) was used for a lab evaluation. In the laboratory evaluation, films of nylon 6 (B73YP from Allied-Signal as the control) and nylon 6/nanoclay composite were prepared by cast film extrusion on a C.W. Brabender ¾" single screw extruder (Model 2503) with a general purpose screw (L/D=25:1). The extruder barrel zone temperatures were set as follows: zone 1 : 225°C; zone 2 : 230°C; zone 3 : 235°C; and zone 4 : 240°C. The melt temperature was between 270°C and 280°C based on these temperature settings. The oxygen transmission rate (OTR) was measured by a MOCON® OX-TRAN® 2/20 series instrument at 55% relative humidity and 23°C. The OTR data of these films as well as the laminates made from these films by lamination to the paper substrate showed that the nylon 6/nanoclay composite (OTR=0.7 cc-mil/100 in²-day) exhibited better oxygen barrier than the control nylon 6(OTR=2.5-3 1.1 cc-mil/100 in²-day). The tensile modulus of the film samples was measured using an Instron machine (Model 1122) based on the TAPPI test method T-494. The pulling rate was 4 inch/min. The tensile modulus of the nylon 6/nanoclay composite (153,000 psi) was also found to be higher than that of the control nylon 6 (107,000 psi).

### EXAMPLE 2

A pilot line run was conducted to make laminated structures for orange juice packaging. The list of raw materials used in the pilot line trial is as follows:
1) Low density polyethylene (LDPE)-Tenite 1924P from Eastman Chemical Company.
2) Paperboard - Grade 8893 solid bleach sulfate (SBS) with a basis weight of 287 lbs./3 MSF from International Paper Company.
3) Nylon 6 - B73YP from Allied-Signal.
4) Tie layer - Tymor 1221E from Morton International.
5) Ethylene vinylalcohol copolymer (EVOH) - Soarnol D2908 from Nippon Gohsei of Japan.
6) Nylon 6/nanoclay composite - Ube nylon 1022C2 from Ube Industries, Limited of Japan.

Two laminated structures were made in this trial using the multilayer co-extrusion coating technique. They are:

| Designation | Structure |
|---|---|
| Control | LDPE/paperboard/nylon 6/tie/LDPE/tie/EVOH/tie/ LDPE |
| Exp-1 | LDPE/paperboard/nylon 6-nanoclay/tie/LDPE/tie/ EVOH/tie/LDPE |

The designation of nylon-6 nanoclay refers to nylon 6/nanoclay composite. During the co-extrusion process, we did not encounter any problems associated with nylon 6/nanoclay composite. The runnability of the nylon 6/nanoclay composite appeared very good and no gel or other thermal decomposition bi-product was detected in the co-extruded laminated structure.

The laminated structures prepared from the pilot line trial were tested for their oxygen barrier properties. The OTR was measured using a MOCON® instrument at 90% relative humidity and 23°C. Table 1 shows the results. It is quite obvious that the experimental structure (Exp-1) exhibited better oxygen barrier properties than the control structure because nylon 6 in the control was replaced with nylon 6/nanoclay composite in the structure designated as Exp-1.

**TABLE 1**

| **Sample Designation** | **OTR(cc/100 in² - day** |
|---|---|
| Control | 1.8 |
| Exp-1 | 1 |

### EXAMPLE 3

An additional structure was also made during the pilot line trial as described in Example 2. This additional experimental structure did not contain any EVOH layer.

| Designation | Structure |
|---|---|
| Exp-2 | LDPE/paperboard/nylon 6-nanoclay/tie/LDPE/tie/ nylon 6/tie/LDPE |

Blanks were then cut out using a Thompson Press. Cartons were formed on an Evergreen-H6 filler and filled with Trauth's Dairy concentrated orange juice followed by top sealing. All the filled cartons were stored at 38°F until use. The control cartons used are a commercial product currently being sold to our customers for orange juice storage.

A sensory panel of 24 people were assembled and a triangle sensory test was performed on orange juice that was stored 1)in the control cartons and 2) in the cartons which were designated as Exp-2. In a triangle taste test, panelists were given three samples. Two of the three samples comprise one of the product variable while the other sample is from the other product variable, which is called the "odd" sample. The panelists were instructed to taste all three samples and determine which sample is the odd one. A 95% confidence level was deemed appropriate. At the 95% confidence level, 13 out of the 24 panelists must correctly identify the odd sample in order to reject the null hypothesis and claim that a significant difference exists. In a triangle test, one can only obtain result on whether the two samples taste differently or not. It does not tell us which one tastes better than the other one.

**TABLE 2**

| **Time after Filling** | **Number of Correct Responses** | **Significance** |
|---|---|---|
| Day 1 | 12 | Not significantly different |
| Week 4 | 5 | Not significantly different |
| Week 9 | 10 | Not significantly different |

Table 2 lists the test results. At no time did 13 out of the 24 panelists correctly identify the odd sample. Therefore, there is no significant difference in taste between orange juice stored in the control cartons and the cartons and the cartons designated as Exp-2. In other words, the cartons made from the structure designated as Exp-2 preserved the flavor and taste of orange juice as well as the control cartons even after 9 weeks of storage inside a refrigerator. The OTR on the board structure designated as Exp-2 was 1.4 cc/100in² - day, which was better than that of the control (1.8 cc/100in² - day). The significance of the results is that the EVOH layer was not present in the Exp-2 structure. The result suggests that one can make a laminated structure consisting of nylon 6/nanoclay composite but no EVOH at all and the cartons made out of this laminated structure can preserve the orange juice flavor as well as the control cartons which contain an EVOH layer in their structure. This could lead to better production yield and potential cost savings.

Other embodiments and variations of the laminate structures contained herein will become apparent to those of ordinary skill in the art upon reading the present disclosure, and it is intended that the present invention be limited only by the broadest interpretation of the appended claims to which the inventor may be legally entitled.

## Claims

1. A laminate structure for packaging and other non-packaging applications comprising:
i. a paper substrate (4); and
ii. at least one polymer/nanoclay composite layer (6) comprising nanoclay particles with a thickness ranging from 0.7 to 9.0 nanometers applied to said paper substrate (4), wherein said polymer/nanoclay composite layer (6) is comprised of a blend of a barrier polymer resin and a nanoclay, wherein said nanoclay is dispersed in the barrier polymer resin on a nanometer scale and the amount of the nanoclay in the composite layer is from 0.5 to7.0% by weight of the composite layer.

2. The laminate structure as claimed in claim 1 further comprising a tie-layer (12; 16; 20; 24) between said paper substrate and said polymer/nanoclay composite layer.

3. The laminate structure, as claimed in claim 1 wherein said barrier polymer resin is selected from a group of polymers consisting of: polyamides, selected from the group consisting of: nylon 6, nylon 66, nylon 10, nylon 6-10, nylon 12, amorphous nylons, and MXD6 nylon; ethylene vinyl alcohol copolymer; a copolymer of ethylene and unsaturated ester; selected from vinyl acetate; or methyl acryl ate; polyethylene terephthalate; polyethylene naphthalate; liquid crystalline polyesters; and ethylene-based ionomer; and blends thereof.

4. The laminate structure as claimed in claim 1 wherein said nanoclay is smectite clay selected from a montmorillonite, a hectorite, a saponite, or a beidellite.

5. The laminate structure as claimed in claim 1 further comprising a layer of polyolefin (8; 14; 22) attached to an uncoated surface of said paper substrate (4).

6. The laminate structure, as claimed in claim 5 wherein said polyolefin is polypropylene, low density polyethylene; high density polyethylene; linear low density polyethylene; very low density polyethylene; a copolymer of ethylene and unsaturated ester selected from vinyl acetate or methyl acrylate; an ethylene-based ionomer; or blends thereof.

7. A packaging structure made from the laminate structure (4, 6) of claim 1.

8. The packaging structure as claimed in claim 7 further comprising a tie-layer (12; 16; 20; 24) displaced between said paper substrate (4) and said polymer/nanoclay composite layer (6).

9. The packaging structure as claimed in claim 7 wherein said barrier polymer resin is selected from the group consisting of nylon 6; nylon 6,6; nylon 10; nylon 6,10; nylon 12; amorphous nylons; MXD6 nylons; ethylene vinyl alcohol copolymers; copolymers of ethylene and unsaturated ester selected from vinyl acetate or methyl acrylate; polyethylene terephthalate; polyethylene naphthalate; liquid crystalline polyesters; an ethylene-based ionomer; or blends thereof.

10. The packaging structure as claimed in claim 7 wherein said nanoclay is smectite clay selected from a montmorillonite; hectorite; saponite; or beidellite.

11. The packaging structure as claimed in claim 7 further comprising a tie layer (16), an ethylene/vinyl alcohol copolymer layer (28), a tie layer (20), and a polyolefin layer (22) attached to a non-paper bonding side of said polymer/nanoclay composite layer (6).

12. The packaging structure as claimed in claim 11 wherein said polyolefin is polypropylene; low density polyethylene; high density polyethylene; linear low density polyethylene; very low density polyethylene; a copolymer of ethylene and unsaturated ester selected from vinyl acetate or methyl acrylate; an ethylene-based ionomer; or blends thereof.

13. The packaging structure as claimed in claim 7 further comprising a polyolefin layer (8; 14; 22) attached to an uncoated side of said paper substrate (4).

14. The packaging structure as claimed in claim 13 wherein said polyolefin layer is polypropylene; low density polyethylene; high density polyethylene, linear low density polyethylene; very low density polyethylene; a copolymer of ethylene and an unsaturated ester selected from vinyl acetate or methyl acrylate; an ethylene-based ionomer; or blends thereof.

15. The packaging structure as claimed in claims 13 further comprising a tie layer (16), an ethylene vinyl alcohol copolymer layer (28), a tie layer (20) and a polyolefin layer (22) attached to the non-substrate bonding side of the polymer/nanoclay composite layer (6).

16. The packaging structure as claimed in claim 13 further comprising a tie layer (12) followed by a polyethylene layer (14) attached to the non-substrate bonding side of the polymer/nanoclay composite layer (6).

17. The packaging structure as claimed in claim 16 further comprising a tie layer (16)/ flavor retention layer (18)/tie layer (20)/polyolefin layer (22)/ laminate attached to said polyethylene layer (14) of said tie layer (12)/polyethylene layer (14) composite structure.

18. The packaging structure as claimed in claim 17 wherein said flavor retention layer is ethylene vinyl alcohol copolymer; polyamides selected from nylon 6, nylon 66, nylon 10, nylon 6,10, nylon 12, amorphous nylons, MXD6 nylon or blends thereof; or polyesters selected from polyethylene terephthalate, polyethylene naphthalate, or their blends.

19. The packaging structure as claimed in claim 13, further comprising a tie layer (24) followed by a polypropylene layer (26) attached to a non-paper bonding side of said polymer/nanoclay composite (6).

20. The packaging structure as claimed in claim 7, wherein said paper substrate (4) is paper or paperboard.

21. A packaging as claimed in claim 7 further comprising at least one polymer applied directly to said paper substrate (4) on a side opposite to the nanoclay composition layer (6) wherein said additional polymer is selected from nylon 6; nylon 66; nylon 10; nylon 610; nylon 12; amorphous nylons; MXD6 nylon; ethylene/vinyl alcohol copolymer; polyethylene terephthalate; polyethylene naphthalate; liquid crystalline polyesters; polypropylene; low density polyethylene; high density polyethylene; linear low density polyethylene; very low density polyethylene; a copolymer of ethylene and a unsaturated ester selected from vinyl acetate or methyl acrylate; an ethylene-based ionomer; or blends thereof.

22. A packaging structure as claimed in claim 7 further comprising at least one additional polymer applied directly to said polymer/nanoclay composite layer (6), wherein said at least one additional polymer is nylon 6; ethylene/vinyl alcohol copolymer; polyethylene terephthalate; polyethylene naphthalate; liquid crystalline polyesters; polypropylene; low density polyethylene; high density polyethylene; linear low density polyethylene; very low density polyethylene; copolymer of ethylene and unsaturated ester, selected from vinyl acetate or methyl acryl ate; an ethylene-based ionomer; or blends there.

23. A cup, container, baking tray, food carrying tray, or plate made from the laminated structure as claimed in claim 1.

24. A package, pouch, or carton made from the laminated structure as claimed in claim 7.

## Patentansprüche

1. Laminatstruktur für Verpackungs- und andere Nichtverpackungs-Anwendungen, **gekennzeichnet durch**
a) ein Papiersubstrat (4) und
b) mindestens eine Schicht aus Polymer/Ton-Nanoverbundstoff (6) bestehend aus Nano-Ton-Partikeln mit einer Dicke von zwischen 0,7 - 9,0 nm, die auf das Papiersubstrat (4) aufgebracht werden, wobei die Schicht (6) aus Polymer/Ton-Nanoverbundstoff aus einem Gemisch eines eine Sperre bildenden Polymerharzes und eines Nano-Tonmaterials besteht, wobei das Nano-Tonmaterial in dem die Sperre darstellenden Polymerharz im Nanometer-Bereich dispergiert ist und der Anteil an Nano-Tonmaterial in der Verbundschicht zwischen 0,5 - 7,0 Gewichtsprozent der Verbundschicht beträgt.

2. Laminatstruktur nach Anspruch 1, **gekennzeichnet durch** eine Verbindungsschicht (12; 16; 20; 24) zwischen dem Papiersubstrat und der Polymer/Ton-Nano-Verbundstoffschicht aufweist.

3. Laminatstruktur nach Anspruch 1, bei der das Sperr-Polymerharz aus einer Gruppe von Polymeren ausgewählt ist, die besteht aus: Polyamiden, ausgewählt aus der Gruppe bestehend aus Nylon 6, Nylon 6,6, Nylon 10, Nylon 6,10, Nylon 12, amorphen Nylons und MXD6 Nylon; Äthylen-Vinylalkohol-Copolymer; einem Copolymer aus Äthylen und ungesättigtem Ester, ausgewählt aus Vinylacetat oder Methyl-Acrylat; Polyäthylen-Terephthalat, Polyäthylen-Naphthalat, Flüssigkristall-Polyestern, und lonomer auf Äthylenbasis, und Mischungen daraus.

4. Laminatstruktur nach Anspruch 1, bei der das Nano-Tonmaterial Smectit-Ton ist, der aus einem Montmorillonit, einem Hectorit, einem Saponit oder einem Beidellit besteht.

5. Laminatstruktur nach Anspruch 1, **gekennzeichnet durch** eine Schicht aus Polyolefin (8; 14; 22), die mit einer überzugsfreien Oberfläche des Papiersubstrats (4) verbunden ist.

6. Laminatstruktur nach Anspruch 5, bei der das Polyolefin Polypropylen, Polyäthylen geringer Dichte, Polyäthylen hoher Dichte, Polyäthylen linearer geringer Dichte, Polyäthylen sehr geringer Dichte, ein Copolymer aus Äthylen und ungesättigtem Ester, ausgewählt aus Vinylacetat oder Methylacrylat, ein lonomer auf Äthylenbasis, oder Mischungen daraus ist.

7. Verpackungsstruktur bestehend aus der Laminatstruktur (4, 6) nach Anspruch 1.

8. Verpackungsstruktur nach Anspruch 7, **gekennzeichnet durch** eine Verbindungsschicht (12; 16; 20; 24), die zwischen dem Papiersubstrat (4) und der Schicht (6) aus Polymer/Ton-Nanoverbundstoff angeordnet ist.

9. Verpackungsstruktur nach Anspruch 7, bei der das Sperr-Polymerharz aus der Gruppe ausgewählt ist, die aus Nylon 6, Nylon 6,6, Nylon 10, Nylon 6,10, Nylon 12; amorphen Nylons, MXD6 Nylons, Äthylen-Vinylalkohol-Copolymeren, Copolymeren aus Äthylen und ungesättigtem Ester, ausgewählt aus Vinylacetat oder Methyl-Acrylat, Polyäthylen-Terephthalat, Polyäthylen-Naphthalat, Flüssigkristall-Polyestern; lonomer auf Äthylenbasis, oder Mischungen daraus besteht.

10. Verpackungsstruktur nach Anspruch 7, bei der das Nano-Tonmaterial Smectit-Ton ist, der aus einem Montmorillonit, Hectorit; Saponit oder Beidellit besteht.

11. Verpackungsstruktur nach Anspruch 7, **gekennzeichnet durch** eine Sperrschicht (16), eine Äthylen/Vinylalkohol-Copolymer-Schicht (28), eine Verbindungsschicht (20) und eine Polyolefin-Schicht (22), die mit einer nicht aus Papier bestehenden Klebeseite der Polymer/Ton-Nanolverbundschicht (6) verbunden ist.

12. Verpackungsstruktur nach Anspruch 11, bei der das Polyolefin Polypropylen; Polyäthylen geringer Dichte; Polyäthylen hoher Dichte; Polyäthylen linearer geringer Dichte; Polyäthylen mit sehr geringer Dichte; ein Copolymer aus Äthylen und ungesättigtem Ester, ausgewählt aus Vinylacetat oder Methylacrylat; ein lonomer auf Äthylenbasis, oder Mischungen daraus ist.

13. Verpackungsstruktur nach Anspruch 7, **gekennzeichnet durch** eine Schicht aus einem Polyolefin (8; 14; 22), die mit einer überzugsfreien Oberfläche des Papiersubstrats (4) verbunden ist.

14. Verpackungsstruktur nach Anspruch 13, bei der die Polyolefin-Schicht Polypropylen; Polyäthylen geringer Dichte; Polyäthylen hoher Dichte; Polyäthylen linearer geringer Dichte Polyäthylen sehr geringer Dichte; ein Copolymer von Äthylen und ein ungesättigter Ester, ausgewählt aus Vinylacetat oder Methylacrylat; ein lonomer auf Äthylenbasis, oder Mischungen daraus ist.

15. Verpackungsstruktur nach Anspruch 13, **gekennzeichnet durch** eine Sperrschicht (16), eine Äthylen-Vinylalkohol-Copolymer-Schicht (28), eine Verbindungsschicht (20) und eine Polyolefin-Schicht (22), die mit der Nicht-Substrat-Schicht der Polymer/Ton-Nano-Verbundschicht (6) verbunden ist.

16. Verpackungsstruktur nach Anspruch 13, **gekennzeichnet durch** eine Sperrschicht (12) mit anschließender Polyäthylen-Schicht (14), die mit der kein Substrat aufweisenden Verbindungsseite der Polymer/Ton-Nano-Verbundschicht (6) verbunden ist.

17. Verpackungsstruktur nach Anspruch 16, **gekennzeichnet durch** eine Verbindungsschicht (16) /Geschmacks-Rückhalteschicht (18) /Verbindungsschicht (20) /Polyolefin-Schicht (22) /Laminat mit der Polyäthylen-Schicht (14) der Verbindungsschicht (12) /Polyäthylen-Schicht (14)- Verbundstruktur verbunden ist.

18. Verpackungsstruktur nach Anspruch 17, bei der die Geschmacks-Rückhalteschicht Äthylen-Vinylalkohol-Copolymer; Polyamide, ausgewählt aus Nylon (6), Nylon (6,6), Nylon (10), Nylon (6,10), Nylon (12), amorphe Nylons, MXD6-Nylon oder Mischungen daraus; oder Polyester, ausgewählt aus Polyäthylen-Terephthalat, Polyäthylen-Naphthalat oder Mischungen daraus, ist.

19. Verpackungsstruktur nach Anspruch 13, **gekennzeichnet durch** eine Verbindungsschicht (24), an die sich eine Polypropylen-Schicht (26) anschließt, die mit einer Nichtpapier-Klebeseite der Polymer/Ton-Nano-Verbundschicht (6) verbunden ist.

20. Verpackungsstruktur nach Anspruch 7, **dadurch gekennzeichnet, dass** das Papiersubstrat (4) Papier oder Pappe ist.

21. Verpackungsstruktur nach Anspruch 7, **gekennzeichnet durch** mindestens ein Polymer, das direkt auf das Papier-Substrat (4) auf einer Seite entgegengesetzt zu der Ton-Nano-Verbundstoff-Schicht (6) aufgebracht ist, wobei das zusätzliche Polymer aus Nylon 6; Nylon 6,6; Nylon 10; Nylon 6,10; Nylon 12; amorphen Nylons; MXD6-Nylon; Äthylen/Vinylalkohol-Copolymer; Polyäthylen-Terephthalat; Polyäthylen-Naphthalat; Flüssigkristall-Polyestern; Polypropylen; Polyäthylen geringer Dichte; Polyäthylen hoher Dichte; Polyäthylen linearer geringer Dichte; Polyäthylen sehr geringer Dichte; Copolymer von Äthylen und einem ungesättigten Ester ausgewählt aus Vinyl-Acetat oder Methyl-Acrylat; Ionomer auf Äthylenbasis oder Mischungen daraus ausgewählt ist.

22. Verpackungsstruktur nach Anspruch 7, **gekennzeichnet durch** mindestens ein zusätzliches Polymer, das direkt auf die Polymer/Ton-Nano-Verbundstoff Schicht (6) aufgebracht ist, wobei das mindestens eine zusätzliche Polymer Nylon 6; Äthylen/Vinylalkohol-Copolyer; Polyäthylen-Terephthalat, Polyäthylen-Naphthalat; Flüssigkristall-Polyester; Polypropylen; Polyäthylen geringer Dichte; Polyäthylen hoher Dichte; Polyäthylen linearer niedriger Dichte; Polyäthylen sehr geringer Dichte; Copolymer aus Äthylen und ungesättigtem Ester, ausgewählt aus Vinyl-Acetat oder Methyl-Acrylat; ein lonomer auf Äthylenbasis; oder Mischungen daraus ist.

23. Becher, Behälter, Backblech, Nahrungsmitteltablett oder Platte bestehend aus einer laminierten Struktur nach Anspruch 1.

24. Verpackung, Beutel, Tasche oder Karton bestehend aus der laminierten Struktur nach Anspruch 7.

## Revendications

1. Structure stratifiée pour applications d'emballage et applications autres que l'emballage, comprenant :
i. un substrat de papier (4) ; et
ii. au moins une couche composite de polymère/nanoargile (6) comprenant des particules de nanoargile d'une épaisseur de 0,7 à 9,0 nanomètres, appliquée sur ledit substrat de papier (4), dans laquelle ladite couche composite de polymère/nanoargile (6) est constituée d'un mélange d'une résine polymère barrière sur une échelle nanométrique et la quantité de nanoargile dans la couche composite représente 0,5 à 7,0 % en poids de la couche composite.

2. Structure stratifiée selon la revendication 1, comprenant en outre une couche de liaison (12 ; 16 ; 20 ; 24) entre ledit substrat de papier et ladite couche composite de polymère/nanoargile.

3. Structure stratifiée selon la revendication 1, dans laquelle la résine polymère barrière est choisie dans un groupe de polymères constitué des suivants : des polyamides choisis dans le groupe constitué du Nylon 6, du Nylon 66, du Nylon 10, du Nylon 6-10, du Nylon 12, des Nylons amorphes et du Nylon MXD6 ; un copolymère d'éthylène-alcool vinylique ; un copolymère d'éthylène et d'ester insaturé choisi parmi l'acétate de vinyle ou l'acrylate de méthyle ; le poly(téréphtalate d'éthylène) ; le poly(naphtalate d'éthylène) ; des polyesters cristallins liquides ; un ionomère à base d'éthylène ; et leurs mélanges.

4. Structure stratifiée selon la revendication 1 dans laquelle ladite nanoargile est une argile smectite choisie parmi une montmorillonite, une hectorite, une saponite ou une beidellite.

5. Structure stratifiée selon la revendication 1, comprenant en outre une couche de polyoléfine (8 ; 14 ; 22) fixée à une surface non revêtue dudit substrat de papier (4).

6. Structure stratifiée selon la revendication 5 dans laquelle ladite polyoléfine est le polypropylène, un polyéthylène de basse densité ; un polyéthylène de haute densité ; un polyéthylène linéaire de basse densité ; un polyéthylène de très basse densité ; un copolymère d'éthylène et d'ester insaturé choisi parmi l'acétate de vinyle ou l'acrylate de méthyle ; un ionomère à base d'éthylène ; ou leurs mélanges.

7. Structure d'emballage fabriquée avec la structure stratifiée (4, 6) selon la revendication 1.

8. Structure d'emballage selon la revendication 7, comprenant en outre une couche de liaison (12 ; 16 ; 20 ; 24) déplacée entre ledit substrat de papier (4) et ladite couche composite de polymère/nanoargile (6).

9. Structure d'emballage selon la revendication 7, dans laquelle ladite résine polymère barrière est choisie dans le groupe constitué des suivants : le Nylon 6, le Nylon 66, le Nylon 10, le Nylon 6-10, le Nylon 12, les Nylons amorphes et le Nylon MXD6 ; des copolymères d'éthylène-alcool vinylique ; des copolymères d'éthylène et d'ester insaturé choisi parmi l'acétate de vinyle ou l'acrylate de méthyle ; le poly(téréphtalate d'éthylène) ; le poly(naphtalate d'éthylène) ; des polyesters cristallins liquides ; un ionomère à base d'éthylène ; ou leurs mélanges.

10. Structure d'emballage selon la revendication 7, dans laquelle ladite nanoargile est une argile smectite choisie parmi une montmorillonite, une hectorite, une saponite ou une beidellite.

11. Structure d'emballage selon la revendication 7, comprenant en outre une couche de liaison (16), une couche de copolymère d'éthylène-alcool vinylique (28), une couche de liaison (20) et une couche de polyoléfine (22) fixée à une face de collage autre que de papier de ladite couche composite de polymère/nanoargile (6).

12. Structure d'emballage selon la revendication 11, dans laquelle ladite polyoléfine est le polypropylène ; un polyéthylène de basse densité ; un polyéthylène de haute densité ; un polyéthylène linéaire de basse densité ; un polyéthylène de très basse densité ; un copolymère d'éthylène et d'ester insaturé choisi parmi l'acétate de vinyle ou l'acrylate de méthyle ; un ionomère à base d'éthylène ; ou leurs mélanges.

13. Structure d'emballage selon la revendication 7, comprenant en outre une couche de polyoléfine (8 ; 14 ; 22) fixée à une face non revêtue dudit substrat de papier (4).

14. Structure d'emballage selon la revendication 13, dans laquelle ladite couche de polyoléfine est le polypropylène ; un polyéthylène de basse densité ; un polyéthylène de haute densité ; un polyéthylène linéaire de basse densité ; un polyéthylène de très basse densité ; un copolymère d'éthylène et d'ester insaturé choisi parmi l'acétate de vinyle ou l'acrylate de méthyle ; un ionomère à base d'éthylène ; ou leurs mélanges.

15. Structure d'emballage selon la revendication 13, comprenant en outre une couche de liaison (16), une couche de copolymère d'éthylène-alcool vinylique (28), une couche de liaison (20) et une couche de polyoléfine (22) fixée à une face de collage autre que le substrat de la couche composite de polymère/nanoargile (6).

16. Structure d'emballage selon la revendication 13, comprenant en outre une couche de liaison (12) suivie d'une couche de polyéthylène (14) fixée à une face de collage autre que le substrat de la couche composite de polymère/nanoargile (6).

17. Structure d'emballage selon la revendication 16, comprenant en outre un stratifié formé d'une couche de liaison (16)/couche de rétention des arômes (18)/couche de liaison (20)/couche de polyoléfine (22) fixé à une couche de polyéthylène (14) de ladite structure composite formée de la couche de liaison (12)/couche de polyéthylène (14).

18. Structure d'emballage selon la revendication 17, dans laquelle ladite couche de rétention des arômes est choisie parmi un copolymère d'éthylène/alcool vinylique ; des polyamides choisis parmi le Nylon 6, le Nylon 66, le Nylon 10, le Nylon 6,10, le Nylon 12, les Nylons amorphes, le Nylon MXD6 ou leurs mélanges ; ou des polyesters choisis parmi le poly(téréphtalate d'éthylène), le poly(naphtalate d'éthylène) ou leurs mélanges.

19. Structure d'emballage selon la revendication 13, comprenant en outre une couche de liaison (24) suivie d'une couche de polypropylène (26) fixée à une face de collage autre que de papier dudit composite de polymère/nanoargile (6).

20. Structure d'emballage selon la revendication 7, dans laquelle ledit substrat de papier (4) est du papier ou du carton.

21. Emballage selon la revendication 7, comprenant en outre au moins un polymère appliqué directement sur ledit substrat de papier (4) sur une face opposée à la couche de composition de nanoargile (6), dans lequel ledit polymère additionnel est choisi parmi le Nylon 6 ; le Nylon 66 ; le Nylon 10 ; le Nylon 610 ; le Nylon 12 ; les Nylons amorphes ; le Nylon MXD6 ; un copolymère d'éthylène/alcool vinylique ; le poly(téréphtalate d'éthylène) ; le poly(naphtalate d'éthylène) ; les polyesters liquides cristallins ; le polypropylène ; un polyéthylène de basse densité ; un polyéthylène de haute densité ; un polyéthylène linéaire de basse densité ; un polyéthylène de très basse densité ; un copolymère d'éthylène et un ester insaturé choisi parmi l'acétate de vinyle ou l'acrylate de méthyle ; un ionomère à base d'éthylène ; ou leurs mélanges.

22. Structure d'emballage selon la revendication 7, comprenant en outre au moins un polymère additionnel appliqué directement sur ladite couche composite de polymère/nanoargile (6), dans laquelle ledit au moins un polymère est choisi parmi le Nylon 6 ; un copolymère d'éthylène/alcool vinylique ; le poly(téréphtalate d'éthylène) ; le poly(naphtalate d'éthylène) ; les polyesters liquides cristallins ; le polypropylène ; un polyéthylène de basse densité ; un polyéthylène de haute densité ; un polyéthylène linéaire de basse densité ; un polyéthylène de très basse densité ; un copolymère d'éthylène et d'ester insaturé choisi parmi l'acétate de vinyle ou l'acrylate de méthyle ; un ionomère à base d'éthylène ; ou leurs mélanges.

23. Gobelet, récipient, plaque de cuisson, plateau porteur d'aliments ou assiette formés de la structure stratifiée selon la revendication 1.

24. Emballage, sachet ou boîte en carton formés de la structure stratifiée selon la revendication 7.
